# EUROPÄISCHE PATENTANMELDUNG

(11) **EP 1 767 805 A2**
(43) Veröffentlichungstag der Anmeldung: **28.03.2007**
(21) Anmeldenummer: 06019970.0
(22) Anmeldetag: 25.09.2006
(51) Int. Cl.: F16D 65/097

(54) **Scheibenbremse, insbesondere für ein Nutzfahrzeug**

(30) Priorität: 26.09.2005 DE 102005045877
(71) Anmelder: KNORR-BREMSE SYSTEME FÜR NUTZFAHRZEUGE GMBH, 80809 München (DE)
(72) Erfinder: Springer, Mario, 94535 Eging am See (DE); Härtl, Thomas, 94501 Beutelsbach (DE)
(74) Vertreter: Mattusch, Gundula

(57) **Zusammenfassung**

Eine Scheibenbremse, insbesondere für ein Nutzfahrzeug, mit einem einen Aufnahmeraum (2) für eine Zuspanneinrichtung aufweisenden Bremssattel (1), der eine mit Bremsbacken in Wirkverbindung bringbare Bremsscheibe aufweist und an einem Bremsträger befestigt ist, sowie einem lösbar am Bremssattel (1) befestigten Haltebügel (3), an dem sich auf die Außenkanten der Bremsbacken einwirkende Federn abstützen, ist so ausgebildet, dass der Haltebügel (3) federbelastet in einer Formschlusshalterung (4) einliegt.

## Beschreibung

Die vorliegende Erfmdung betrifft eine Scheibenbremse, insbesondere für ein Nutzfahrzeug entsprechend dem Oberbegriff des Anspruchs 1.

Eine solche Scheibenbremse ist beispielsweise aus der DE 86 15 015 U1 bekannt. Der Haltebügel dieser Scheibenbremse dient im wesentlichen dazu, für Federn, in diesem Fall Blattfedern, die die Bremsbacken federnd verspannen, ein Widerlager zu bilden. Dabei ist der Haltebügel lösbar am Bremssattel befestigt, um so eine schnelle Montage wie auch Demontage vor allem der Bremsbacken zu gewährleisten. Letzteres beispielsweise, um einen für einen Bremsbelagwechsel notwendigen Zugriff auf die Bremsbacken problemlos zu ermöglichen.

Hierzu trägt auch bei, dass der Haltebügel mit einfachen Mitteln an- und abzubauen ist, wozu er einerseits in eine Ausnehmung des Bremssattels eingesteckt ist und andererseits mit dem Bremssattel, unter Überbrückung einer Einstecköffnung für die Bremsbacken durch Verschrauben fest verbunden ist.

Bei dieser Scheibenbremse ist die taschenförmige Ausnehmung auf der Reaktionsseite, also auf der die Bremsenaußenseite bildenden Seite des Bremssattels vorgesehen, die einer im Bremssattel angeordneten Zuspanneinrichtung gegenüberliegt, die aktionsseitig an der der Fahrzeugmitte zugewandten Seite der Bremse angeordnet ist.

Bei einer anderen bekannten Scheibenbremse ist die taschenförmige Ausnehmung auf der der Zuspanneinrichtung bzw. dem Aufnahmeraum dafür zugewandten Seite vorgesehen, wobei die Ausnehmung durch mechanische Bearbeitung eingebracht sein kann oder bei einer Herstellung des Bremssattels durch Gießen gleich mit angeformt wird.

Das andere, der taschenförmigen Ausnehmung abgewandte Ende des Haltebügels ist mit dem Bremssattel verschraubt. Allerdings ist hierzu eine entsprechend aufwendige Bearbeitung erforderlich, wozu ein Bohren der Kernbohrung und ein anschließendes Gewindeschneiden gehört.

Da solche Scheibenbremsen in großen Stückzahlen hergestellt werden, stehen solche Arbeitsgänge einer optimierten Fertigung entgegen, so dass das Produkt insgesamt nur mit einem entsprechend hohen Aufwand herstellbar ist.

Dies gilt gleichermaßen für eine bekannte Ausführungsvariante, bei der der Haltebügel reaktionsseitig in ein Gussauge im Bremssattel eingesteckt ist, das eine Querbohrung zur Aufnahme aufweist, in die zur Befestigung des Haltebügels ein Bolzen, eine Scheibe oder ein Splint gesteckt wird.

Die Vielzahl der dazu erforderlichen Teile steht einer optimierten Fertigung entgegen, wozu auch die Montage des Haltebügels zählt, die bislang relativ zeitaufwendig ist.

Der Erfindung liegt daher die Aufgabe zugrunde, eine Scheibenbremse der gattungsgemäßen Art so weiter zu entwickeln, dass sie kostengünstiger herstellbar ist und die Montage sowie Demontage der Bremsbacken einfacherer möglich ist.

Diese Aufgabe wird durch eine Scheibenbremse mit den Merkmalen des Anspruchs 1 gelöst.

Durch die Erfmdung ist nun eine wesentlich einfachere Montage bzw. Demontage des Haltebügels und damit der Bremsbacken möglich, da der Haltebügel mit geringem Arbeitsaufwand einzusetzen bzw. zu entfernen ist.

Darüber hinaus stellt sich Herstellung der Scheibenbremse erheblich einfacherer dar, da nicht nur auf das zusätzliche Einbringen einer Gewindebohrung in den Bremssattel durch Einbringen einer Kernbohrung und Einschneiden eines Gewindes bzw. Einbringen einer Querbohrung verzichtet werden kann, sondern auch auf die Verwendung zusätzlicher Einzelteile, was gleichfalls zu einer Vereinfachung der Montage führt, neben einer Kostenreduzierung durch die Einsparung dieser Teile.

Zur Federbelastung ist eine Feder beispielsweise in Form einer Blattfeder, Spiralfeder, Bügelfeder oder dergleichen vorgesehen, die in einer Aufnahme des Bremssattels weitgehend arretiert einliegt.

Diese Feder ist vorzugsweise formschlüssig mit dem Haltebügel verbunden, beispielsweise durch Verrasten. Denkbar ist aber auch eine stoffschlüssige Verbindung, wie durch Verkleben, Verlöten oder Verschweißen.

Das gegenüberliegende Ende des Haltebügels, das erfindungsgemäß in einer Formschlusshalterung einliegt, kann gabelförmig ausgebildet sein und mit der daran angepassten Formschlusshalterung korrespondieren, wobei die Formschlusshalterung in einer bevorzugten Ausführungsform eine Nut aufweist, in der der Haltebügel in allen Richtungen fixiert einliegt.

Die Formschlusshalterung ebenso wie die Aufnahmetasche sind ohne eine mechanische Bearbeitung herstellbar, insbesondere dann, wenn der Bremssattel, an dem der Haltebügel beidseitig festgelegt ist, als Gussteil ausgebildet wird.

Daneben zeichnet sich die neue Verbindung Haltebügel/Bremssattel durch ihren geringen Platzbedarf aus, wie er im Stand der Technik zum Eindrehen der Schraube bzw. der Stifte oder Splinte in die Querbohrung erforderlich ist.

Die Montage des Haltebügels erfolgt in der Form, dass zunächst das mit der Feder bestückte Ende des Haltebügels in die Aufnahmetasche eindrückt wird, unter Zusammendrücken der Feder, wobei das andere Ende des Haltebügels frei liegt und in die Formschlusshalterung eingesetzt werden kann. Nach einem Loslassen des Haltebügels wird dieser durch die Kraft der Feder gegen die Formschlusshalterung gedrückt, so dass die erwähnte Fixierung in alle Richtungen gegeben ist.

Weitere vorteilhafte Ausbildungen der Erfmdung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer perspektivischen geschnittenen Seitenansicht
- Figur 2: eine Einzelheit der Scheibenbremse in einer perspektivischen Ansicht
- Figur 3: eine andere Einzelheit der Scheibenbremse, ebenfalls in einer perspektivischen Ansicht
- Figur 4: einen Schnitt durch die Einzelheit nach Figur 3

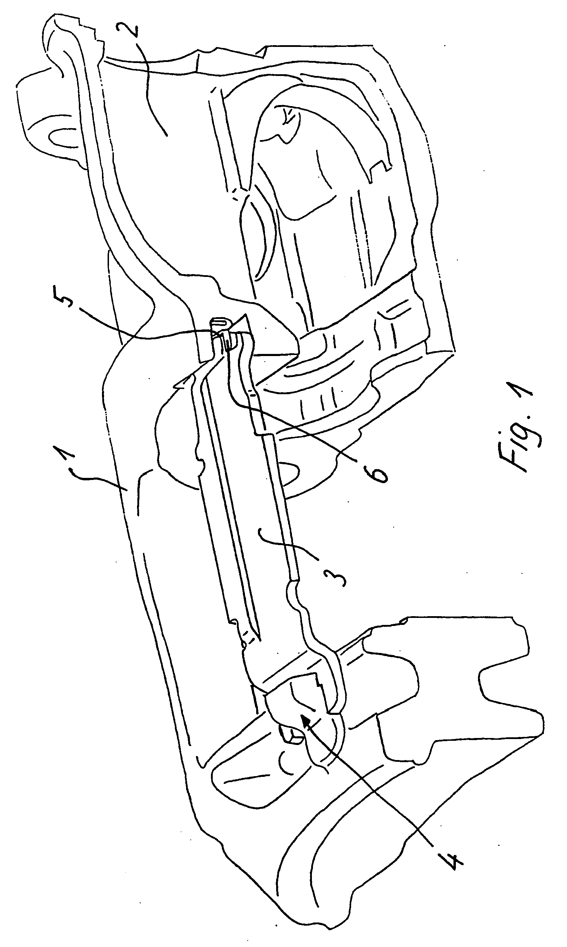

In der Figur 1 ist ein Teil einer Scheibenbremse, insbesondere für ein Nutzfahrzeug dargestellt, mit einem Bremssattel 1, der einen Aufnahmeraum 2 für eine nicht dargestellte Zuspanneinrichtung aufweist und in den eine mit Bremsbacken in Wirkverbindung bringbare Bremsscheibe montierbar ist, wobei der Bremssattel 1 an einem fahrzeugsseitigen Bremsträger befestigbar ist.

An dem Bremssattel 1 ist ein Haltebügel 3 lösbar befestigt, der eine Einführöffnung zum Einbringen der Bremsbacken überspannt und als Niederhalter für ebenfalls nicht dargestellte Federn dient, die auf die Außenkanten der Bremsbacken einwirken.

In dem dem Aufnahmeraum 2 benachbarten Bereich ist der Haltebügel 3 in eine im Bremssattel 1 vorgesehene Aufnahmetasche 5 eingesteckt, während das gegenüberliegende Ende des Haltebügels 3 mit einer am Bremssattel 1 angeformten Formschlusshalterung 4 korrespondiert.

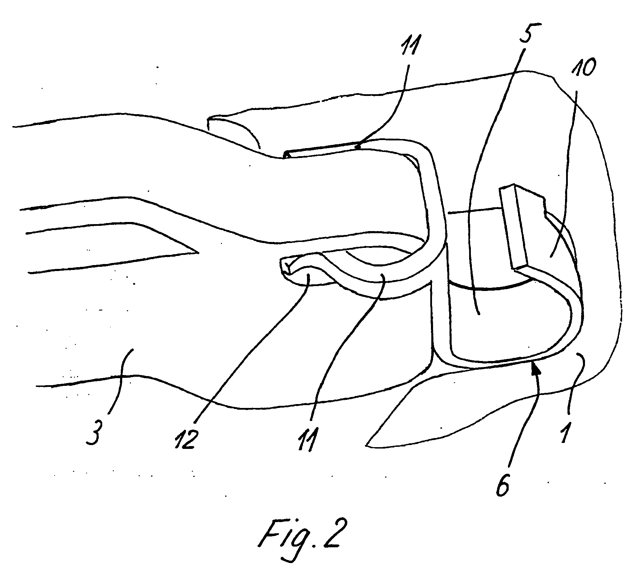

An dem in die Aufnahmetasche 5 eingesteckten Ende des Haltebügels 3 ist eine Feder 6 angeschlossen, die besonders deutlich in der Figur 2 zu erkennen ist.

Dort ist zu sehen, dass die Feder 6 mittels zweier seitlich in Rastöffnungen 12 des Haltebügels 3 eingreifender Rastschenkel 11 am Haltebügel 3 befestigt ist.

Stirnseitig des Haltebügels 3 erstreckt sich ein Bügel 10, der sich an der Rückwand der Aufnahmetasche 5 abstützt und in seiner Breite etwa der zugeordneten Breite der Aufnahmetasche 5 entspricht, so dass die Feder 6 und damit der Haltebügel 3 beidseitig arretiert sind.

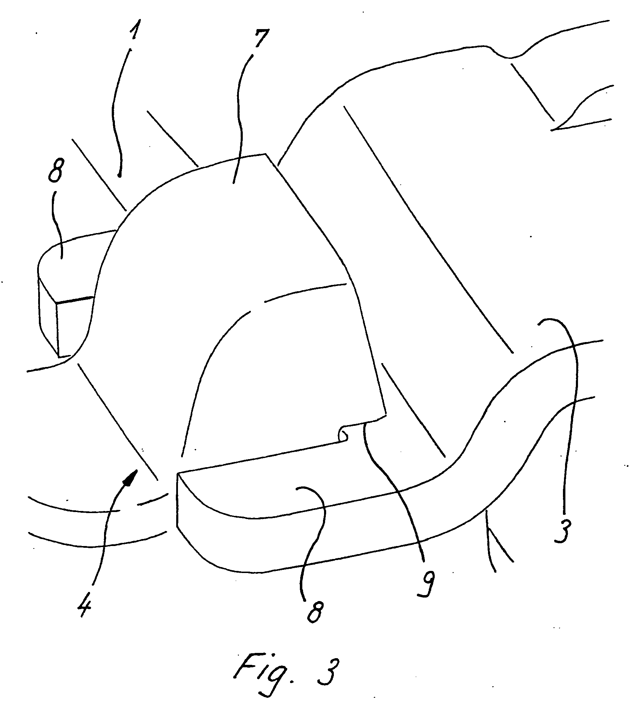

Das andere, mit der Formschlusshalterung 4 korrespondierende Ende des Haltebügels 3 ist, wie die Figur 3 sehr deutlich zeigt, gabelförmig ausgebildet, während die Formschlusshalterung als Höcker 7 an den Bremssattel 1 angeformt ist, der auf seiner dem Haltebügel 3 zugewandten Seite eine Nut 9 aufweist, in der ein Teil des gabelförmigen Endes des Haltebügels 3 einliegt.

An den quer dazu verlaufenden Seiten des Höckers 7 liegen zwei parallel und mit Abstand zueinander verlaufende Zinken 8 an, so dass der über den Druck der Feder 6 gegen den Höcker 7 gedrückte Haltebügel 3 in jeder Richtung fixiert ist.

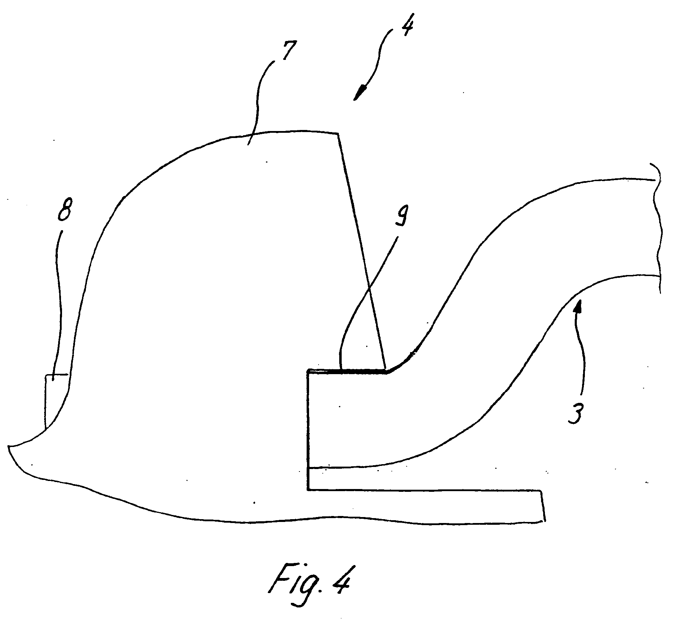

Die Einlagerung des gabelförmigen Endes des Haltebügels 3 in der Nut 9 ist in der Figur 4 als Einzelheit gezeigt. Dort ist auch zu erkennen, dass die Dicke des in der Nut 9 einliegenden Haltebügels 3 etwa der zugeordneten Höhe der Nut 9 entspricht bzw. geringfügig kleiner ist.

Zur Montage des Haltebügels 3 wird dieser mit dem federseitigen Ende in die Aufnahmetasche 5 geführt und unter Deformierung des Bügels 10 der Feder 6 so weit eingeschoben, bis das andere Ende über den Höcker 7 geführt werden kann bis in den Bereich der Nut 9. Nach einem Entlasten der Feder 6 durch Loslassen des Haltebügels 3 wird dieser mit seinem gabelförmigen Ende in die Nut 9 des Höckers 7 gedrückt, wo er federbelastet dauerhaft und fixiert einliegt. Ein Lösen des Haltebügels 3 erfolgt in umgekehrter Reihenfolge.

Anstelle des gezeigten Ausführungsbeispieles sowohl hinsichtlich der Ausbildung der Feder 6 wie auch hinsichtlich der Ausbildung des gegenüberliegenden mit der Formschlusshalterung 4 korrespondierenden Endes sind selbstverständlich auch andere Konfigurationen möglich, beispielsweise als Feder in Form von Spiralfedern, Tellerfedern, Blattfedern oder dergleichen.

Die Ausgestaltung der Formschlusshalterung 4 und des zugeordneten Endes des Haltebügels 3 kann beispielsweise in Form einer Aufnahme/Zapfen vorgesehen sein. Diese Formgebung ist ausschließlich abhängig von funktionalen und fertigungstechnischen Überlegungen.

### Bezugszeichenliste

- 1: Bremssattel
- 2: Aufnahmeraum
- 3: Haltebügel
- 4: Formschlusshalterung
- 5: Aufnahmetasche
- 6: Feder
- 7: Höcker
- 8: Zinken
- 9: Nut
- 10: Bügel
- 11: Rastschenkel
- 12: Rastöffnung

## Patentansprüche

1. Scheibenbremse, insbesondere für ein Nutzfahrzeug, mit einem einen Aufnahmeraum (2) für eine Zuspanneinrichtung aufweisenden Bremssattel (1), der eine mit Bremsbacken in Wirkverbindung bringbare Bremsscheibe aufweist und an einem Bremsträger befestigt ist, sowie einem lösbar am Bremssattel (1) befestigten Haltebügel (3), an dem sich auf die Außenkanten der Bremsbacken einwirkende Federn abstützen, **dadurch gekennzeichnet, dass** der Haltebügel (3) federbelastet in einer Formschlusshalterung (4) einliegt.

2. Scheibenbremse nach Anspruch 1, **dadurch gekennzeichnet, dass** das der Formschlusshalterung (4) gegenüberliegende Ende des Haltebügels (3) mit einer Feder (6) versehen ist, die in einer Aufnahmetasche (5) des Bremssattels (1) einliegt.

3. Scheibenbremse nach Anspruch 1 oder 2, **dadurch gekennzeichnet, dass** die Aufnahmetasche (5) in dem dem Aufnahmeraum (2) benachbarten Bereich angeordnet ist.

4. Scheibenbremse nach einem der vorhergehenden Ansprüche, **dadurch gekennzeichnet, dass** die Feder (6) als Bügel-, Blatt-, Spiral-, Tellerfeder oder dergleichen ausgebildet.

5. Scheibenbremse nach einem der vorhergehenden Ansprüche, **dadurch gekennzeichnet, dass** die Feder (6) formschlüssig mit dem Haltebügel (3) verbunden ist.

6. Scheibenbremse nach einem der vorhergehenden Ansprüche, **dadurch gekennzeichnet, dass** die Feder (6) mindestens einen Rastschenkel (11) aufweist, der in einer Rastöffnung (12) des Haltebügels (3) verrastet einliegt.

7. Scheibenbremse nach einem der vorhergehenden Ansprüche, **dadurch gekennzeichnet, dass** die Feder (6) einen Bügel (10) aufweist, der sich an der Rückwand der Aufnahmetasche (5) abstützt.

8. Scheibenbremse nach einem der vorhergehenden Ansprüche, **dadurch gekennzeichnet, dass** die Breite des Bügels (10) etwa der zugeordneten Breite der Aufnahmetasche (5) entspricht.

9. Scheibenbremse nach einem der vorhergehenden Ansprüche, **dadurch gekennzeichnet, dass** die Formschlusshalterung (4) einen Höcker (7) aufweist, in dem das zugeordnete Ende des Haltebügels (3) formschlüssig einliegt.

10. Scheibenbremse nach einem der vorhergehenden Ansprüche, **dadurch gekennzeichnet, dass** das dem Höcker (7) zugewandte Ende des Haltebügels (3) gabelförmig ausgebildet ist und bereichsweise in einer Nut (9) des Höckers (7) einliegt.

11. Scheibenbremse nach einem der vorhergehenden Ansprüche, **dadurch gekennzeichnet, dass** Zinken (8) des gabelförmigen Endes des Haltebügels (3) an den zugeordneten Seiten des Höckers (7) anliegen.

12. Scheibenbremse nach einem der vorhergehenden Ansprüche, **dadurch gekennzeichnet, dass** die Höhe der Nut (9) etwa der Dicke des Haltebügels (3) im einliegenden Bereich entspricht oder geringfügig größer ist.

13. Scheibenbremse nach einem der vorhergehenden Ansprüche, **dadurch gekennzeichnet, dass** die Höhe der Aufnahmetasche (5) der zugeordneten Höhe des Bügels (10) der Feder (6) entspricht.
